# EUROPEAN PATENT SPECIFICATION

(11) **EP 0 875 897 B1**
(45) Date of publication and mention of the grant of the patent: **21.11.2001**
(21) Application number: 98107993.2
(22) Date of filing: 30.04.1998
(51) Int. Cl.: G11B 33/04

(54) **Compact disc storage case**
Compact-Disc-Aufbewahrungsbehälter
Boîtier de stockage pour disque compact

(30) Priority: 30.04.1997 JP 11268997
(43) Date of publication of application: 04.11.1998
(73) Proprietor: Nepco S.A., 14130 Pont l'Evêque (FR)
(72) Inventor: Sato, Hiroyuki, Ashigarakami-gun, Kanagawa-ken (JP)
(74) Representative: Müller-Boré & Partner Patentanwälte

(56) References cited:
- EP-A- 0 531 113
- EP-A- 0 666 569
- EP-A- 0 791 928

## Description

This invention concerns a flat, roughly parallelepipedic storage case capable of storing relatively small-diameter optical recording discs (hereinafter referred to simply as compact discs), and concerns in particular a compact disc storage case having an improved means of securing the label of said case.

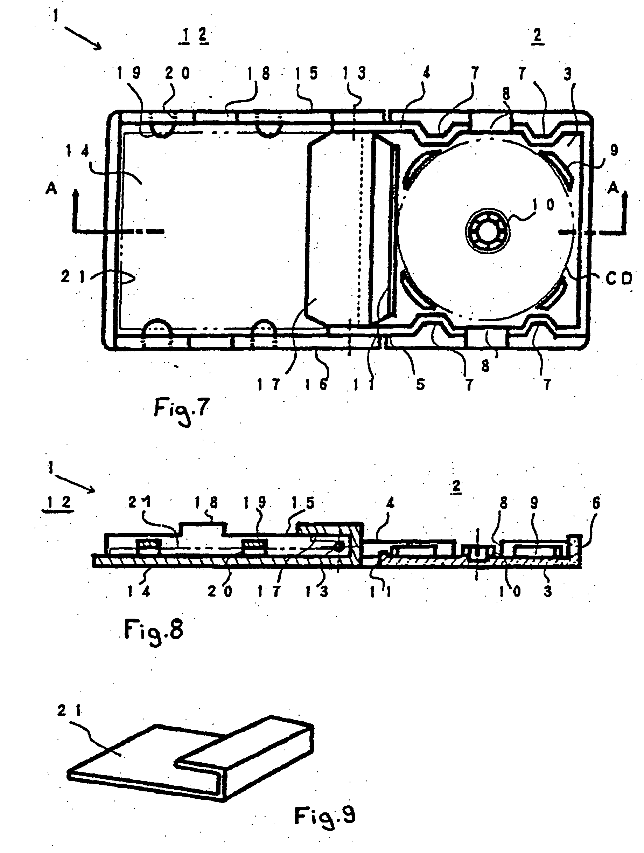

In recent years, for example, many compact discs having a diameter of roughly 12 centimeters and a large storage capacity have been released commercially. The compact discs are normally placed and stored in cases like those shown in Figs. 7 through 10.

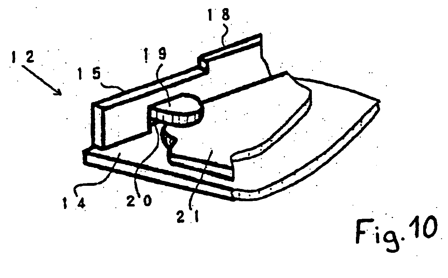

Fig. 7 is a top view of a conventional compact disc case (1) in its opened state; Fig. 8, a cross-section cut along line A-A in Fig. 7; Fig. 9, an oblique view of the label (21) folded into an L shape that is inserted into the pocket (17) in the lid (12) that comprises part of said compact disc storage case, and Fig. 10, an oblique view of the label tab (19), and its periphery, that projects from the inner surface of the sides (15, 16) of said lid (12).

The conventional compact disc case (1) would comprise a storage compartment (2) and a lid (12) together forming a flat parallelepiped. Said storage compartment (2), in addition to having, protruding from the middle of the inner surface of its bottom panel (3), a disc stopper (10) that fits into the compact disc's center hole and stops the compact disc from moving in the radial direction, would have multiple disc anchors (9) arranged around said compact disc's. outer edge. Furthermore, said storage compartment (2) would be enclosed by both sides (4, 5) and the front (6) along the inner periphery of three sides of said bottom panel (3). On the remaining side of said bottom panel (3) would be a notch (16) in such a manner that the pocket (17) of said lid (12), described below, aligns with the plane of said bottom panel (3) when said lid (12) rotates. On a section of said sides (4, 5) there would be multiple clasping depressions (7) that clasp the label tabs (19) of said lid (12), described below, and apertures (8) that facilitate the insertion and removal of said compact discs (CD). At the ends of said sides (4, 5) would be the bearing holes into which the axis (13) of said lid (12) insert.

On said lid (12), the sides (15, 16) would protrude, along the periphery of the inner surface of two sides of the top panel (14), slightly higher than said sides' (4, 5) of said storage compartment, and have a rising (18) corresponding to the aforementioned aperture (8), while the inner surface of said sides (15, 16) would have multiple label tabs (19) corresponding to said clasping depressions (7) in said storage compartment (2).

Additionally, at the intersection between the top face of said label tabs (19) and the inner surface of said sides (4, 5) there would be a hole (20) formed by a slide core comprising a portion of the formed die. Also, said lid (12) would have a pocket (17) extending with an L-shaped profile from one edge of said top' panel (14) along the side opposing the notch (11) in said bottom panel (3), and said top panel (14) between this pocket (17) and said sides (15,16) would have a slot (not shown) permitting the insertion and rotation of one end each of said sides (4, 5).

A conventional compact disc storage case thus comprised would have an aforesaid lid (12) made of transparent plastic so that, at the very least, when aportion of the label (21) in Fig. 9 folded into a roughly L-shaped section was inserted between the inner surface of said top panel (14) and the top face of said label tabs (19) while fitting the L-shaped portion of aforesaid label (21) in the inner surface of said pocket (17), information about the contents stored on the compact disc (CD) that had been printed on the outer surface of the foldings of the label (21) would be visible from the outer faces of said lid (12).

However, with the conventional compact disc storage case (1) described above, an undercut would result from the overlapping in the same direction between the inner surface of said pocket (17) and said label tabs (19) of said lid (12), necessitating the addition of slide cores to the forming die, and in particular necessitating that the slide cores pass through the positions in the undercut of each said label tab (19) corresponding to said holes (20), thereby precluding significant reductions in die fabrications costs, assembly costs and maintenance costs, and also making it difficult to improve forming tact.

The objective of this invention is to provide a compact disc storage case that resolves the problems with conventional techniques, lowers forming costs, and increasing the efficiency of forming work.

The objective of this invention is achieved by a flat, parallelepipedic compact disc storage case having a lid moveably hinged at one end of the lid's sides to one end of the sides of the disc storage compartment, and characterized by said disc storage compartment having a rising that projects from the bottom panel between the ends of said sides; and by said rising having both a top face label receptor and side face label receptor for securing the bent surfaces of the L-shaped label.

Being that the compact disc storage case that is this invention is a flat, parallelepipedic compact disc storage case having a lid moveably hinged at one end of the lid's sides to one end of the sides of the disc storage compartment; that said lid has a rising projecting from the bottom panel between the ends of said sides; and that said rising has both a top face label receptor and side face label receptor for securing the bent surfaces of the L-shaped label, relatively large undercuts such as conventional pockets are eliminated, said rising does not form undercuts, and said storage compartment, after forming, is easily discharged from the die cavity.

Preferably, the compact disc storage case is characterized by said top face label receptor comprising a horizontal supporting panel located on the upper inner surface of a diagonal divider and projecting from the upper edge in the longitudinal direction thereto with a slight difference in level; a horizontal upper panel projecting along the upper edge of a vertical divider opposing said diagonal divider in a such a manner as to enclose the periphery of said horizontal supporting panel at a position slightly higher than said periphery; and edge guide panels at both ends of said horizontal upper panel that guide the insertion of the edges of the L-shaped label.

The top face label receptor of the compact disc storage case that is this invention comprises a horizontal supporting panel located on the upper inner surface of a diagonal divider and projecting from the upper edge in the longitudinal direction thereto with a slight difference in level; a horizontal upper panel projecting along the upper edge of a vertical divider opposing said diagonal divider in a such a manner as to enclose the periphery of said horizontal supporting panel at a position slightly higher than said periphery; and edge guide panels at both ends of said horizontal upper panel that guide the insertion of the edges of the L-shaped label.- The outer edge of the top face label portion of said L-shaped label presses against the periphery enclosed and formed by said edge guide panel and diagonal divider, and the closer surface of the edge portion of the top face label presses against the bottom face of said edge guide panels, so that the entirety of said top face label is securely mounted on and held against said horizontal supporting panel.

Furthermore, it is preferred that said horizontal supporting panel has a first gap that facilitates the curving of the edge of said L-shaped label during its insertion between the ends of said horizontal supporting panel and the inner surface of the sides; and that a notch corresponds to the label stopper that protrudes over said horizontal supporting panel from the center of the top edge of said diagonal divider and having a surface area slightly larger than said label stopper.

Said horizontal supporting panel of the compact disc storage case that is this invention has a first gap that facilitates the curving of the edge of said L-shaped label during its insertion between the ends of said horizontal supporting panel and the inner surface of the sides, and a notch corresponding to the label stopper that protrudes over said horizontal supporting panel from the center of the top edge of said diagonal divider and having a surface area slightly larger than said label stopper, and is bent by the pressure applied with the fingertips during insertion of the top face label portion of said L-shaped label into said first gap and the notch, thereby facilitating insertion into said edge guide panels and label stopper and a pressed fit against said horizontal supporting panel.

Furthermore, it is preferred that said side face label receptor has a second gap that facilitates the insertion of the side face label portion of said L-shaped label between the inner surface of said horizontal divider (36) and the longitudinal edge of said horizontal supporting panel opposing that inner surface.

Because said side face label receptor of the compact disc storage case that is this invention has a second gap that facilitates the insertion of the side face label portion of said L-shaped label between the inner surface of said vertical divider and the longitudinal edge of said horizontal supporting panel opposing that inner surface, said second gap assures that the side face label portion of said L-shaped label, which is inserted into said second gap along the bottom face of said horizontal supporting panel, presses against the inner surface of said vertical divider and is maintained in a vertically bent state.

Furthermore, said side face label receptor preferably has a third gap that facilitates the insertion of the side face label portion of said L-shaped label between the inner periphery of said horizontal upper panel and the longitudinal edge of said horizontal supporting panel.

Because said side face label receptor of the compact disc storage case that is this invention has a third gap that facilitates the insertion of the side face label portion of said L-shaped label between the inner periphery of said horizontal upper panel and the longitudinal edge of said horizontal supporting panel, said third gap prevents the abrupt bending deformation caused by the inner surface of said vertical divider in the side face label portion of said L-shaped label, which is inserted into said first gap along the bottom face of said horizontal supporting panel.

Furthermore, it is preferred that said lid has holes in its top panel larger than the projected area of the label tabs and opposing said label tabs, which project from the inner surfaces of said sides.

Because said lid of the compact disc storage case that is this invention has holes in its top panel larger than the projected area of the label tabs and opposing said label tabs, which project from the inner surfaces of said sides, projections for the stationary-side die that form the top panel-side undercut of said label tabs are, in the place of slide cores for the undercut of said label tabs, located at the positions corresponding to said holes, and the formed lid, from which said label tabs protrude, is easily discharged from the die cavity as the movable-side die is opened.

Furthermore, said label tabs preferably also function as closure tabs for said lid.

Because said label tabs of the compact disc storage case that is this invention also function as closure tabs for said lid, there is no increase in protrusions having undercut in the inner surface of the sides of said lid.

The invention is described below by way of an example with reference to attached drawings, in which
- Fig. 1: shows a top view of the compact disc storage case that is this invention in its opened state,
- Fig. 2: shows a cross-section cut along line B-B in Fig. 1,
- Fig. 3: shows a top view of a magnifications of the main part of the rising (24) that comprising a portion of the compact disc storage case that is this invention in Fig. 1,
- Fig. 4: shows a cross-section cut along line C-C in Fig. 3,
- Fig. 5: shows a cross-section cut along line D-D in Fig. 3.
- Fig. 6: shows an oblique view of the label tab (23) and hole (28) of the lid (23) that comprise a portion of the compact disc storage case (30) that is this invention,
- Fig. 7: shows a top few of a conventional compact disc storage case in its opened state,
- Fig. 8: shows a cross-section cut along line A-A in Fig. 7,
- Fig. 9: shows an oblique view of the label, bent into an L shape, that is inserted into the pocket of the lid that comprises a portion of a conventional compact disc storage case and
- Fig. 10: shows an oblique view of the label tab, and its periphery, that conventionally projects from the inner surface of the sides of a lid

One embodiment of the compact disc storage case (30) that is this invention is described below using the attached drawings. Also, as all members of the compact disc storage case (30) that is this invention other than the rising (24) of the storage compartment and the holes (28) of the lid (23), which are described later, are the same as those of the aforesaid conventional compact disc storage case (1), the same reference numbers are used in the description.

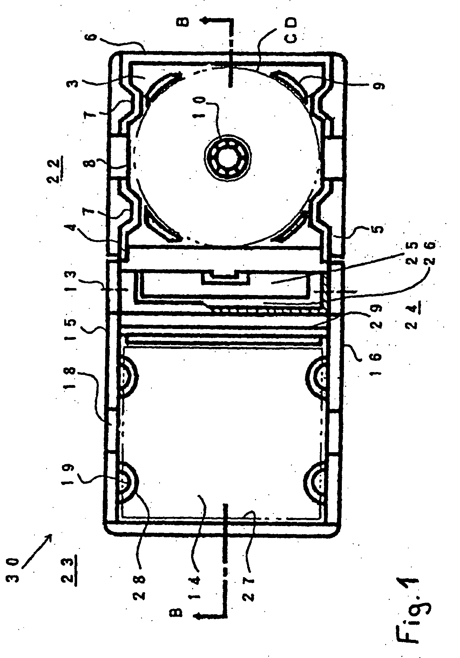

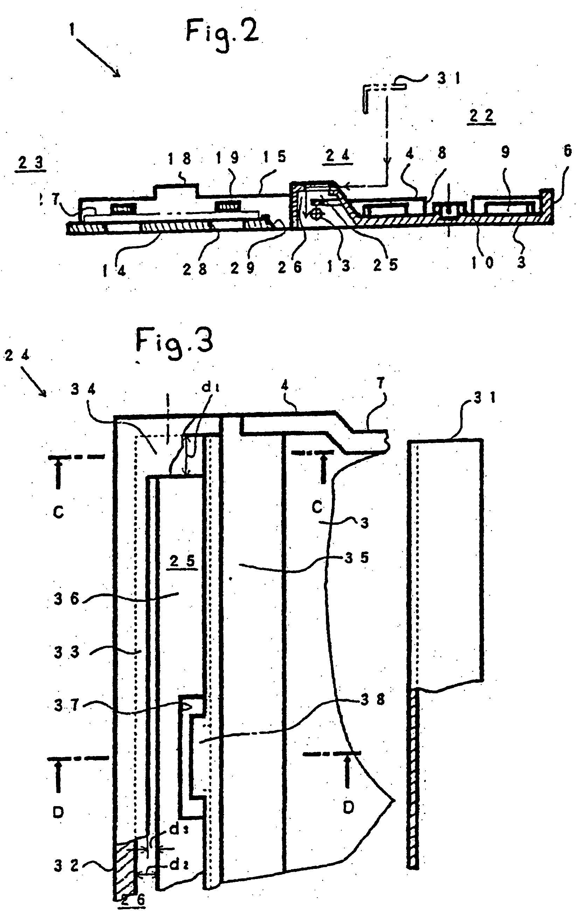

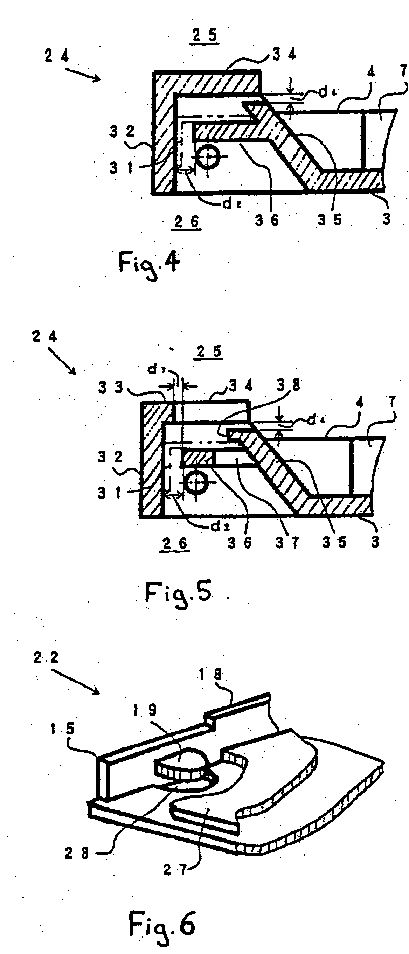

Fig. 1 is a top view of the compact disc storage case (30) that is this invention in its opened state; Fig. 2, a cross- section cut along line B-B in Fig. 1; Fig. 3, a top view of a magnifications of the main part of the rising (24) that comprising a portion of the compact disc storage case (30) that is this invention in Fig. 1; Fig. 4, a cross-section cut along line C-C in Fig. 3; Fig. 5, a cross-section cut along line D-D in Fig. 3; and Fig. 6, an oblique view of the label tab (23) and hole (28) of the lid (23) that comprise a portion of the compact disc storage case (30) that is this invention.

The compact disc storage case (30) that is this invention comprises a combination of a storage compartment (22) and lid (23) that together form a flat parallelepiped. Said storage compartment (22), in addition to having, protruding from the middle of the inner surface of its bottom panel (3), a disc stopper (10) that fits into the compact disc's center hole and stops the compact disc from moving in the radial direction, has multiple disc anchors (9) arranged around said compact disc's outer edge.

Furthermore, said storage compartment (22) is enclosed by the sides (4, 5) and the front (6) along the inner periphery of three sides of said bottom panel (3). On the remaining side of said bottom panel (3) is a rising (24) that protrudes in such a manner as to bridge the ends of said sides (4, 5).

On a portion of said sides (4, 5) there are multiple clasping depressions (7) that clasp the label tabs (19) of said lid (23), described below, and apertures (8) that facilitate the insertion and removal of said compact discs (CD). The axis (13) for said lid (23) inserts into the ends of said sides (4, 5), supporting said lid (23) and allowing it to rotate.

The sides (15, 16) of said lid (23) protrude, along the periphery of the inner surface of two sides of the top panel (14), slightly higher than the sides (4, 5) of said storage compartment, and have a rising (18) of a height corresponding to the aforementioned apertures (8), while the inner surface of said sides (15, 16) has multiple protruding label tabs (19) corresponding to said clasping depressions (7) in said storage compartment (22).

Formed in the inner surface of said top panel (14) and opposing said label tabs (19) are holes (23) formed by protrusions (not shown) in the stationary-side die that comprises a portion of the forming die. By designing said holes (23) to have roughly the same projected profile as said label tabs (19) and to occupy equal or greater surface area, label tabs (19) with good contours and parting lines can be obtained through cooperation with the movable-side die. In addition, said lid (23) has a notch (29) on the side opposing said rising (24) that assures that the top face of said rising (24) aligns in a coplanar manner with said top panel (14) when said lid (23) is rotated.

Furthermore, said rising (24) of said storage compartment (22) has both a top face label receptor (25) and side face label receptor (26) for securing the bent surfaces of the L-shaped label (31), while said top face label receptor (25) favorably comprises a horizontal supporting panel (36) located on the upper inner surface of a diagonal divider (35) and projecting from the upper edge in the longitudinal direction thereto with a slight difference in level; a horizontal upper panel (33) projecting along the upper edge of a vertical divider'(32) opposing said diagonal divider (35) in such a manner as to enclose the periphery of said horizontal supporting panel (36) at a position slightly higher than said periphery; and edge guide panels (34) at both ends of said horizontal upper panel (33) that guide the insertion of the edges of the L-shaped label (31). Moreover, between the bottom face of said edge guide panel (34) and the upper edge of said diagonal divider (35) is a fourth gap (d4) roughly equal in thickness to said L-shaped label (31).

With said top face label receptor (25), the outer edge of the top face label portion of said L-shaped label (31) presses against the periphery enclosed and formed by said edge guide panel (34) and diagonal divider (35), and the closer surface of the edge portion of the top face label presses against the bottom face of said edge guide panels (34), so that the entirety of said top face label (31) is securely mounted on and held against said horizontal supporting panel (33).

Also favorably, said horizontal supporting panel (36) has a first gap (d1) that facilitates the curving of the edge of said L-shaped label during its insertion between the ends of said horizontal supporting panel (36) and the inner surface of the sides (4, 5), and a notch (37) corresponding to the label stopper (38) that protrudes over said horizontal supporting panel (36) from the center of the top edge of said diagonal divider (35) and having a surface area slightly larger than said label stopper (38), and is bent by the pressure applied with the fingertips during insertion of the top face label portion of said L-shaped label into said first gap (d1) and the notch (37), thereby facilitating insertion into said edge guide. panels (34) and label stopper (38) and assuring a pressed fit against said horizontal supporting panel (36).

Additionally, said side face label receptor (26) has a second gap (d2) that facilitates the insertion of the side face label portion of said L-shaped label (31) between the inner surface of said vertical divider (32) and the longitudinal edge of said horizontal supporting panel (36) opposing that inner surface, said second gap (d2) assures that the side face label portion of said L-shaped label (31), which is inserted into said second gap (d2) along the bottom face of said horizontal supporting panel (36), presses against the inner surface of said vertical divider (32) and is maintained in a vertically bent state.

Also favorably, said side face label receptor (26) has a third, gap (d3) that facilitates the insertion of the side face label portion of said planar L-shaped label (31) between the inner periphery of said horizontal upper panel (33) and the longitudinal edge of said horizontal supporting panel (36), said third gap (d3) prevents the abrupt bending deformation caused by the inner surface of said vertical divider (32) in the side face label portion of said L-shaped label (31), which is inserted into said first gap (d1) along the bottom face of said horizontal supporting panel (36).

Thus comprised, the compact disc storage case (30) that is this invention, when said rising (24) is made of transparent plastic, at the very least allows information about the contents stored on the compact disc (CD) that has been printed on the outer surface of the foldings of said L-shaped label (31) to be viewed through said top face label receptor (25) and side face label receptor (26) of said rising (24).
Moreover, if necessary, a portion of the top panel label (27) can be inserted in the so-called undercut portion between a top panel (14) made of transparent plastic and the top face of said label tabs (19) so that different information about stored content can be seen through said top panel (14). In addition, said label tabs (19) also function as closure tabs for said lid (23).

The above-mentioned compact disc storage case (30) that is this invention will have new effects like the following: Namely, being that the compact disc storage case (30) that is this invention, which is a flat, parallelepipedic compact disc storage case having a lid (23) moveably hinged at one end of the lid's sides (15, 16) to one end of the sides (4, 5) of the disc storage compartment (22), includes said storage compartment (22) having said rising (24) protruding from said bottom panel (3) between the ends of said sides (4, 5), with the rising (24) of said storage compartment (22) having both a top face label receptor (25) and side face label receptor (26) for securing the bent surfaces of the L-shaped label (31), said L-shaped label (31) is secured to the top face and side face of said. rising (24), so that relatively large undercuts such as conventional pockets are eliminated, said rising (24) does not form undercuts, and said storage compartment (22), after forming, is easily discharged from the die cavity.

Furthermore, in the compact disc storage case (30) that is this invention, said top face label receptor (25) comprises a horizontal supporting panel (36) located on the upper inner surface of a diagonal divider (35) and projecting from the upper edge in the longitudinal direction thereto with a slight difference in level; a horizontal upper panel (33) projecting along the upper edge of the vertical divider (32) opposing said diagonal divider (35) in a such a manner as to enclose the periphery of said horizontal supporting panel (36) at a position slightly higher than said periphery; and said edge guide panels (34) at both ends of said horizontal upper panel (33) that guide the insertion of the edges of the L-shaped label (31), and so the outer edge of the top face label portion of said L-shaped label presses against the periphery enclosed and formed by said edge guide panel and diagonal divider, and the closer surface of the edge portion of the top face label presses against the bottom face of said edge guide panels, the result being that the entirety of said top face label is securely mounted on and held against said horizontal supporting panel (36).

Furthermore, because said horizontal supporting panel (36) of the compact disc storage case (30) that is this invention has a first gap (d1) that facilitates the curving of the edge of said L-shaped label (31) during its insertion between the ends of said horizontal supporting panel (36) and the inner surface of the sides, and a notch (37) corresponding to the label stopper (38) that protrudes over said horizontal supporting panel (36) from the center of the top edge of said diagonal divider (34) and having a surface area slightly larger than said label stopper (38), and is bent by the pressure applied with the fingertips during insertion of the top face label portion of said L-shaped label (31) into said first gap (d1) and the notch (37), thereby facilitating insertion between the respective bottom faces of said edge guide panels (34) and the label stopper (38), and a pressed fit against said horizontal supporting panel (36).

Furthermore, because said side face label receptor (26) of the compact disc storage case that is this invention has a second gap (d2) that facilitates the insertion of the side face label portion of said L-shaped label (31) between the inner surface of said vertical divider (32) and the longitudinal edge of said horizontal supporting panel opposing that inner surface, said second gap (d2) assures that the side face label portion of said L-shaped label (31), which is inserted into said second gap (d2) along the bottom face of said horizontal supporting panel (36), presses against the inner surface of said vertical divider (32) and is maintained in a vertically bent state.

Furthermore, because said side face label receptor (26) of the compact disc storage case (30) that is this invention has a third gap (d3) that facilitates the insertion of the side face label portion of said planar L-shaped label (31) between the inner periphery of said horizontal upper panel (33) and the longitudinal edge of said horizontal supporting panel (36), said third gap (d3) prevents the abrupt bending deformation caused by the inner surface of said vertical divider (32) in the side face label portion of said L-shaped label (31), which is inserted into said first gap along the bottom face of said horizontal supporting panel (36).

Furthermore, because said lid (23) of the compact disc storage case (30) that is this invention has holes (29) in said top panel (14) larger than the projected area of the label tabs (19) and opposing the label tabs (19), which project from the inner surfaces of said sides (15, 16), projections for the stationary-side die that form the top panel-side undercut of said label tabs (19) are arranged in the place of slide cores for the undercut of said label tabs (19), while the formed lid (23), from which said label tabs (19) protrude, is easily discharged from the die cavity as the movable-side die is opened.

Furthermore, because said label tabs (19) of the compact disc storage case (30) that is this invention also function as closure tabs for said lid (23), the increase in protrusions having undercut in the inner surface of the sides (15, 16) of said lid (23) has been minimized.

Hence, the compact disc storage case (30) that is this invention has made it possible to reduce forming costs and increase the efficiency of forming work. Brief descriptions of drawings

### List of reference numerals

- 1: Conventional compact disc storage case
- 2: Storage compartment
- 3: Bottom panel
- 4: Side
- 5: Side
- 6: Front
- 7: Clasping depression
- 8: Aperture
- 9: Disc anchor
- 10: Disc stopper
- 11: Notch
- 12: Lid
- 13: Axis
- 14: Top panel
- 15: Side
- 16: Side
- 17: Pocket
- 18: Rising
- 19: Label tab
- 20: Hole
- 21: Label
- 22: Storage compartment of this invention
- 23: Lid of this invention
- 24: Rising
- 25: Top face label receptor
- 26: Side face label receptor
- 27: Top panel label
- 28: Hole of this invention
- 29: Notch
- 30: Compact disc storage case of this invention
- 31: L-shaped label
- CD: Compact disk

## Claims

1. A flat, parallelepipedic compact disc storage case having a lid moveably hinged at one end of said lid's sides to one end of the sides of the disc storage compartment **characterized by**
a disc storage compartment (22) having a rising (24) projecting from the bottom panel (3) between the ends of said sides (4, 5); and by said rising (24) having both a top face label receptor (25) and side face label receptor (26) for securing the bent surfaces of the L-shaped label (31).

2. A compact disc storage case according to claim 1 **characterized by**
said top face label receptor (25) comprising a horizontal supporting panel (36) located on the upper inner surface of a diagonal divider (35) and projecting from the upper edge in the longitudinal direction thereto with a slight difference in level;
a horizontal upper panel (33) projecting along the upper edge of a vertical divider (32) opposing said diagonal divider (35) in a such a manner as to enclose the periphery of said horizontal supporting panel (35) at a position slightly higher than said periphery; and
edge guide panels (34) at both ends of said horizontal upper panel (33) that guide the insertion of the edges of the L-shaped label (31).

3. A compact disc storage according to claim 2, **characterized by**
said horizontal supportinging panel (36) has a first gap (d1) that facilitates the curving of the edge of said L-shaped label (31) during its insertion between the ends of said horizontal supporting panel (36) and the inner surface of the sides (4, 5); and
a notch (37) corresponding to the label stopper (38) that protrudes over said horizontal supporting panel (36) from the center of the top edge of said diagonal divider (35) and having a surface area slightly larger than said label stopper (38).

4. A compact disc storage case according to claim 1, **characterized by**
said side face label receptor (26) having a second gap (d2) that facilitates the insertion of the side face label portion of said L-shaped label (31) between the inner surface of said vertical divider (32) and the longitudinal edge of said horizontal supporting panel (36) opposing that inner surface.

5. A compact disc storage case according to claim 4, **characterized by**
said side face label receptor (26) having a third gap (d3) that facilitates the insertion of the side face label portion of said L-shaped label (31) between the inner periphery of said horizontal upper panel (33) and the longitudinal edge of said horizontal supporting panel (36).

6. A compact disc storage case according to claim 1, **characterized by**
said lid (23) having holes (29) in its top panel (14) larger than the projected area of the label tabs (19) and opposing the label tabs (19), which project from the inner surfaces of said sides (15, 16).

7. A compact disc storage case according to claim 6, **characterized by**
said label tabs (19) also functioning as closure tabs for said lid (23).

## Patentansprüche

1. Flacher, parallelepipedischer Compact-Disc-Aufbewahrungsbehälter, welcher einen Deckel aufweist, welcher bewegbar an einem Ende der Seiten des Deckels an einem Ende der Seiten des Disc-Aufbewahrungsraums angelenkt ist, **gekennzeichnet durch**
einen Scheiben- bzw. Disc-Aufbewahrungsraum (22), welcher einen Anstieg bzw. ansteigenden Abschnitt (24) aufweist, welcher von der Bodenplatte (3) zwischen den Enden der Seiten (4, 5) vorragt; und **dadurch**, daß der ansteigende Abschnitt (24) sowohl eine Oberseiten-Etikettaufnahmeeinrichtung (25) als auch eine Seitenflächen-Etikettaufnahmeeinrichtung (26) zum Sichern der gebogenen Oberflächen des L-förmigen Labels bzw. Etiketts (31) aufweist.

2. Compact-Disc-Aufbewahrungsbehälter nach Anspruch 1, **gekennzeichnet durch**
die Oberseiten-Etikettaufnahmeeinrichtung (25), welche eine horizontale Support- bzw. Abstützplatte (36) aufweist, welche an der oberen, inneren Oberfläche einer diagonalen Unterteilungseinrichtung (35) angeordnet ist und von dem oberen Rand bzw. der oberen Kante in der Längsrichtung hiezu mit einem geringfügigen Niveau- bzw. Höhenunterschied vorragt;
eine horizontale, obere Platte (33), welche entlang des oberen Rands bzw. der oberen Kante einer vertikalen Unterteilungseinrichtung (32) vorragt, welche der diagonalen Unterteilungseinrichtung (35) in einer derartigen Weise gegenüberliegt, um den Umfang der horizontalen Supportplatte (35) an einer Position zu umschließen bzw. zu umgeben, welche geringfügig höher als der Umfang ist; und Kanten- bzw. Randführungsplatten (34) an beiden Enden der horizontalen, oberen Platte (33), welche das Einführen der Ränder bzw. Kanten des L-förmigen Etiketts (31) führen.

3. Compact-Disc-Aufbewahrungsbehälter nach Anspruch 2, **dadurch gekennzeichnet, daß**
die horizontale Supportplatte (36) einen ersten Spalt (d1) aufweist, welcher das Krümmen bzw. Biegen des Randes des L-förmigen Etiketts (31) während seines Einführens zwischen die Enden der horizontalen Supportplatte (36) und die innere Oberfläche der Seiten (4, 5) erleichtert; und
eine Kerbe (37) entsprechend der Etikettstopeinrichtung (38), welche über die horizontale Supportplatte (36) von dem Mittelpunkt des oberen Rands der diagonalen Unterteilungseinrichtung (35) vorragt und einen Oberflächenbereich aufweist, welcher geringfügig größer als die Etikettstopeinrichtung (38) ist.

4. Compact-Disc-Aufbewahrungsbehälter nach Anspruch 1, **dadurch gekennzeichnet, daß**
die Seitenflächen-Etikettaufnahmeeinrichtung (26) einen zweiten Spalt (d2) aufweist, welcher das Einführen des Seitenflächen-Etikettabschnitts des L-förmigen Etiketts (31) zwischen die innere Oberfläche der vertikalen Unterteilungseinrichtung (32) und den Längsrand der horizontalen Abstützplatte (36) erleichtert, welche dieser inneren Oberfläche gegenüberliegt.

5. Compact-Disc-Aufbewahrungsbehälter nach Anspruch 4, **dadurch gekennzeichnet, daß**
die Seitenflächen-Etikettaufnahmeeinrichtung (26) einen dritten Spalt (d3) aufweist, welcher das Einführen des Seitenflächen-Etikettabschnitts des L-förmigen Etiketts (31) zwischen den inneren Umfang der horizontalen, oberen Platte (33) und den Längsrand der horizontalen Abstützplatte (36) erleichtert.

6. Compact-Disc-Aufbewahrungsbehälter nach Anspruch 1, **dadurch gekennzeichnet, daß**
der Deckel (23) Löcher (29) in seiner oberen Platte (14) aufweist, welche größer sind als die vorragende Fläche der Etikettvorsprünge bzw. -laschen (19) und den Etikettvorsprüngen (19) gegenüberliegen, welche von den inneren Oberflächen der Seiten (15, 16) vorragen.

7. Compact-Disc-Aufbewahrungsbehälter nach Anspruch 6, **dadurch gekennzeichnet, daß**.
die Etikettvorsprünge (19) auch als Verschlußvorsprünge für den Deckel (23) wirken bzw. funktionieren.

## Revendications

1. Boîte parallélépipédique et plate de rangement d'un disque compact ayant un couvercle articulé de façon mobile à une extrémité des côtés dudit couvercle sur une extrémité des côtés du compartiment de rangement du disque, **caractérisée par**
un compartiment (22) de rangement de disque ayant une partie montante (24) faisant saillie du panneau de fond (3) entre les extrémités desdits côtés (4, 5) ; et par le fait que ladite partie montante (24) comporte à la fois un récepteur (25) d'étiquette à la face supérieure et un récepteur (26) d'étiquette à la face latérale pour fixer les surfaces pliées de l'étiquette (31) en forme de L.

2. Boîte. de rangement de disque compact selon la revendication 1, **caractérisée en ce que** ledit récepteur (25) d'étiquette de la face supérieure comporte un panneau horizontal (36) de support situé à la surface intérieure supérieure d'une cloison diagonale (35) et faisant saillie du bord supérieur dans la direction longitudinale par rapport à elle, avec une légère différence de niveau ;
un panneau supérieur horizontal (33) faisant saillie le long du bord supérieur d'une cloison verticale (32) s'opposant à ladite cloison diagonale (35) d'une manière telle que la périphérie dudit panneau horizontal (35) de support est renfermée dans une position légèrement plus haute que ladite périphérie ; et
des panneaux (34) de guidage de bord aux deux extrémités dudit panneau supérieur horizontal (33) qui guident l'introduction des bords de l'étiquette (31) pliée en L.

3. Boîte de rangement de disque compact selon la revendication 2, **caractérisée en ce que**
ledit panneau horizontal de support (36) présente un premier espace (d1) qui facilite le courbage du bord de ladite étiquette (31) en forme de L pendant son introduction entre les extrémités dudit panneau horizontal de support (36) et la surface intérieure des côtés (4, 5) ; et
une encoche (37) correspondant à la butée (38) d'étiquette qui dépasse au-dessus dudit panneau horizontal (36) de support à partir du centre du bord supérieur de ladite cloison diagonale (35) et ayant une aire de surface légèrement plus grande que ladite butée (38) d'étiquette.

4. Boîte de rangement de disque compact selon la revendication 1, **caractérisée en ce que** ledit récepteur (26) d'étiquette de face latérale présente un second espace (d2) qui facilite l'introduction de la partie d'étiquette de face latérale de ladite étiquette (31) en forme de L entre la surface intérieure de ladite cloison verticale (32) et le bord longitudinal dudit panneau horizontal (36) de support opposé à cette surface intérieure.

5. Boîte de rangement de disque compact selon la revendication 4, **caractérisée en ce que**
ledit récepteur (26) d'étiquette de face latérale présente un troisième espace (d3) qui facilite l'introduction de la partie d'étiquette de face latérale de ladite étiquette (31) en forme de L entre la périphérie intérieure dudit panneau horizontal supérieur (33) et le bord longitudinal dudit panneau horizontal (36) de support.

6. Boîte de rangement de disque compact selon la revendication 1, **caractérisée en ce que**
ledit couvercle (23) présente des trous (29) dans son panneau supérieur (14) plus grands que l'étendue en saillie des pattes (19) d'étiquette et s'opposant aux pattes (19) d'étiquette, lesquelles font saillie des surfaces intérieures desdits côtés (15, 16).

7. Boîte de rangement de disque compact selon la revendication 6, **caractérisée en ce que** lesdites pattes (19) d'étiquette fonctionnent également en tant que pattes de fermeture pour ledit couvercle (23).
